(19) **Europäisches Patentamt** / **European Patent Office** / **Office européen des brevets**

(11) **EP 4 761 336 A1**

## (12) EUROPEAN PATENT APPLICATION
published in accordance with Art. 153(4) EPC

(43) Date of publication:
**17.06.2026 Bulletin 2026/25**

(21) Application number: **24850971.3**

(22) Date of filing: **05.08.2024**

(51) International Patent Classification (IPC):
**H04W 24/08** (2009.01)

(52) Cooperative Patent Classification (CPC):
**H04W 24/08**

(86) International application number:
**PCT/CN2024/109857**

(87) International publication number:
**WO 2025/031326 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.08.2023 CN 202311006627**

(71) Applicant: **Vivo Mobile Communication Co., Ltd.
Dongguan, Guangdong 523863 (CN)**

(72) Inventors:
• **LI, Gen**
 **Dongguan, Guangdong 523863 (CN)**
• **SUN, Yanliang**
 **Dongguan, Guangdong 523863 (CN)**

(74) Representative: **Walaski, Jan Filip et al
Venner Shipley LLP
TIDE Bankside
8 Emerson Street
London SE1 9DU (GB)**

(54) **SIGNAL MEASUREMENT METHOD, TERMINAL, AND NETWORK-SIDE DEVICE**

(57) The present application belongs to the technical field of communications. Disclosed are a signal measurement method, a terminal, and a network-side device. The signal measurement method in the embodiments of the present application comprises: a terminal receiving a cell discontinuous transceiving configuration sent by a network-side device; and measuring a first signal on the basis of the cell discontinuous transceiving configuration.

200

```
┌─────────────────────────────────────────────────┐
│ A terminal receives a cell discontinuous reception/ │──── S210
│ transmission configuration sent by a network side device │
└─────────────────────────────────────────────────┘
                        │
                        ▼
┌─────────────────────────────────────────────────┐
│ Measure a first signal according to the cell discontinuous │──── S220
│ reception/transmission configuration │
└─────────────────────────────────────────────────┘
```

FIG. 2

EP 4 761 336 A1

**Description**

**CROSS-REFERENCE TO RELATED APPLICATIONS**

This application claims priority to Chinese Patent Application No. 202311006627.3, filed with the China National Intellectual Property Administration on August 9, 2023 and entitled "SIGNAL MEASUREMENT METHOD, TERMINAL, AND NETWORK SIDE DEVICE", which is incorporated herein by reference in its entirety.

**TECHNICAL FIELD**

This application pertains to the field of communication technologies, and specifically relates to a signal measurement method, a terminal, and a network side device.

**BACKGROUND**

With development of communication technologies, to reduce network energy consumption, a cell discontinuous reception/transmission (such as cell discontinuous reception (cell DRX)/cell discontinuous transmission (cell DTX)) mechanism is proposed in a related technology.

However, there is still a lack of related regulations for measurement of a reference signal (for example, a channel state information reference signal (CSI-RS)) in the cell discontinuous reception/transmission mechanism, which leads to an unclear behavior of a terminal and affects communication quality.

**SUMMARY**

Embodiments of this application provide a signal measurement method, a terminal, and a network side device, to clarify a terminal measurement behavior in a cell discontinuous reception/transmission mechanism, and ensure communication quality.

According to a first aspect, a signal measurement method is provided, including: receiving, by a terminal, a cell discontinuous reception/transmission configuration sent by a network side device; and measuring a first signal according to the cell discontinuous reception/transmission configuration.

According to a second aspect, a signal measurement method is provided, including: sending, by a network side device, a cell discontinuous reception/transmission configuration to a terminal; where the cell discontinuous reception/transmission configuration is related to signal measurement performed by the terminal.

According to a third aspect, a signal measurement apparatus is provided, including: a transmission module, configured to receive a cell discontinuous reception/transmission configuration sent by a network side device; and a measurement module, configured to measure a first signal according to the cell discontinuous reception/transmission configuration.

According to a fourth aspect, a signal measurement apparatus is provided, including: a transmission module, configured to send a cell discontinuous reception/transmission configuration to a terminal; where the cell discontinuous reception/transmission configuration is related to signal measurement performed by the terminal.

According to a fifth aspect, a terminal is provided. The terminal includes a processor and a memory. The memory stores a program or instructions capable of running on the processor, and the program or the instructions are executed by the processor to implement the steps of the method according to the first aspect.

According to a sixth aspect, a terminal is provided. The terminal includes a processor and a communication interface. The communication interface is coupled to the processor. The processor is configured to run a program or instructions to implement the steps of the method according to the first aspect.

According to a seventh aspect, a network side device is provided. The network side device includes a processor and a memory. The memory stores a program or instructions capable of running on the processor, and the program or the instructions are executed by the processor to implement the steps of the method according to the second aspect.

According to an eighth aspect, a network side device is provided. The network side device includes a processor and a communication interface. The communication interface is coupled to the processor. The processor is configured to run a program or instructions to implement the steps of the method according to the second aspect.

According to a ninth aspect, a readable storage medium is provided. The readable storage medium stores a program or instructions, and the program or the instructions are executed by a processor to implement the steps of the method according to the first aspect, or to implement the steps of the method according to the second aspect.

According to a tenth aspect, a wireless communication system is provided, including a terminal and a network side device. The terminal may be configured to perform the steps of the method according to the first aspect, and the network side device may be configured to perform the steps of the method according to the second aspect.

According to an eleventh aspect, a chip is provided. The chip includes a processor and a communication interface, and the communication interface is coupled to the processor. The processor is configured to run a program or instructions to implement the steps of the method according to the first aspect or implement the steps of the method according to the second aspect.

According to a twelfth aspect, a computer program/program product is provided. The computer program/program product is stored in a storage medium. The program/program product is executed by at least one processor to implement the steps of the method according to the first aspect or to implement the steps of the method according to the second aspect.

In embodiments of this application, the terminal receives the cell discontinuous reception/transmission configuration sent by the network side device, and measures the first signal according to the cell discontinuous reception/transmission configuration, so that the terminal and the network side device can have a consistent understanding of the cell discontinuous reception/transmission configuration, and further the terminal can clarify a signal measurement behavior in a cell discontinuous reception/transmission mechanism, thereby ensuring reliability and high efficiency of signal measurement in the cell discontinuous reception/transmission mechanism.

## BRIEF DESCRIPTION OF DRAWINGS

FIG. 1 is a schematic structural diagram of a wireless communication system according to an example embodiment of this application;

FIG. 2 is a schematic flowchart 1 of a signal measurement method according to an example embodiment of this application;

FIG. 3 is a schematic flowchart 2 of a signal measurement method according to an example embodiment of this application;

FIG. 4 is a schematic flowchart 3 of a signal measurement method according to an example embodiment of this application;

FIG. 5 is a schematic flowchart 4 of a signal measurement method according to an example embodiment of this application;

FIG. 6 is a schematic structural diagram 1 of a signal measurement apparatus according to an example embodiment of this application;

FIG. 7 is a schematic structural diagram 2 of a signal measurement apparatus according to an example embodiment of this application;

FIG. 8 is a schematic structural diagram of a communication device according to an example embodiment of this application;

FIG. 9 is a schematic structural diagram of a terminal according to an example embodiment of this application; and

FIG. 10 is a schematic structural diagram of a network side device according to an example embodiment of this application.

## DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed, the requested result, or the like.

It should be noted that a technology described in the embodiments of this application is not limited to a long term evolution (LTE)/LTE-advanced (LTE-A) system, and may be further applied to other wireless communication systems, such as a code division multiple access (CDMA) system, a time division multiple access (TDMA) system, a frequency division multiple access (FDMA) system, an orthogonal frequency division multiple access (OFDMA) system, a single-carrier frequency-division multiple access (SC-FDMA) system, or another system. The terms "system" and "network" are often used interchangeably in the embodiments of this application. The technology described may be used for the systems and radio technologies described above, as well as other systems and radio technologies. The following describes a new radio (NR) system for illustrative purposes, and NR terms are used in most of the following descriptions. However, these technologies are also applicable to systems such as a 6th generation (6G) communication system other than the NR system.

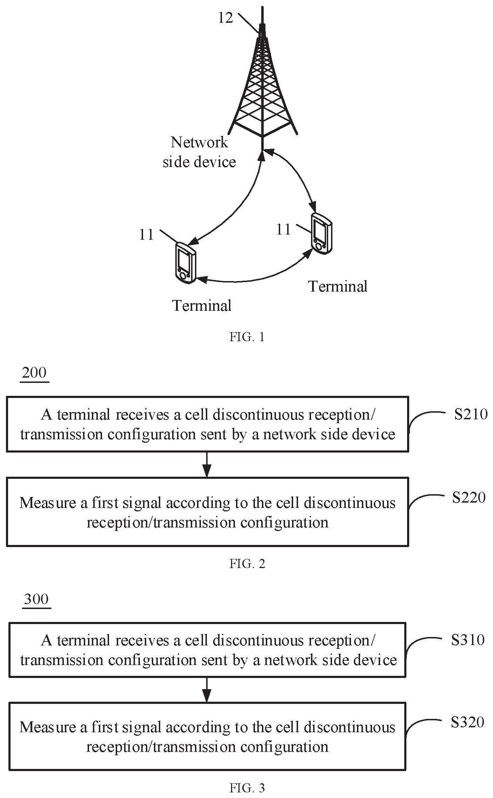

FIG. 1 is a block diagram of a wireless communication system to which an embodiment of this application is applicable. The wireless communication system includes a terminal 11 and a network side device 12. The terminal 11 may be a mobile phone, a tablet personal computer, a laptop computer, a notebook computer, a personal digital assistant (PDA), a palmtop computer, a netbook, an ultra-mobile personal computer (UMPC), a mobile internet device (MID), an augmented reality (AR)/virtual reality (VR) device, a robot, a wearable device, a flight vehicle, vehicle user equipment (VUE), ship-mounted equipment, pedestrian user equipment (PUE), a smart home (a home device with a wireless communication function, for example, a refrigerator, a television, a laundry machine, or a furniture), a gaming console, a personal computer (PC), a teller machine, a self-service machine, or another terminal-side device. The wearable device includes a smartwatch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network side device 12 may include an access network device or a core network device. The access network device may also be referred to as a radio access network (RAN) device, a radio access network function, or a radio access network unit. The access network device may include a base station, a wireless local area network (WLAN) access point (AS), a wireless fidelity (WiFi) node, and the like. The base station may be referred to as a NodeB (NB), an evolved NodeB (eNB), the next generation NodeB (gNB), a new radio NodeB (NR NodeB), an access point, a relay base station (RBS), a serving base station (SBS), a base transceiver station (BTS), a radio base station, a radio transceiver, a basic service set (BSS), an extended service set (ESS), a home NodeB (HNB), a home evolved NodeB, a transmission reception point (TRP), or another proper term in the field. The base station is not limited to a specific technical term, provided that a same technical effect is achieved. It should be noted that in the embodiments of this application, only a base station in an NR system is used as an example for description, and a specific type of the base station is not limited.

In addition, for ease of understanding, a cell discontinuous reception/transmission (Cell DTX/DRX) mechanism involved in the technical solution of this application is described herein.

Related parameters in the Cell DTX/DRX mechanism may be explicitly configured for the terminal by using the base station, and may include at least cell DTX/DRX periodicity, a start slot/offset, on duration, and the like. The Cell DTX/DRX mechanism is divided into two parts, that is, an active period and a non-active period, within each period time through configuration of the related parameters. The base station in the active period can perform sending and receiving normally. In the non-active period, the base station may stop sending or receiving a specific signal and channel, so as to achieve a purpose of network energy saving.

Currently, for the Cell DTX/DRX mechanism, a related parameter of cell discontinuous transmission (cell DTX) and a related parameter of cell discontinuous reception (cell DRX) may be configured together, or may be separately configured. In addition, a Cell DTX/DRX configuration may be activated/deactivated by using radio resource control (RRC) signaling, or may be activated/deactivated by using downlink control information (DCI).

Based on this, technical solutions provided in embodiments of this application are described in detail below with reference to the accompanying drawing by using some embodiments and application scenarios thereof.

FIG. 2 is a schematic flowchart of a signal measurement method 200 according to an example embodiment of this application. The method 200 may be performed by but is not limited to a terminal, and may be specifically performed by hardware or software installed in the terminal. In this embodiment, the method 200 may include at least the following steps.

S210: The terminal receives a cell discontinuous reception/transmission configuration sent by a network side device.

The cell discontinuous reception/transmission configuration may also be referred to as a related parameter of cell discontinuous reception/transmission, such as a cell discontinuous reception/transmission period, a start slot/offset, and on duration.

It should be noted that the cell discontinuous reception/transmission configuration may include a cell discontinuous reception configuration and a cell discontinuous transmission configuration, and both may be sent to the terminal at the same time, or may be separately sent to the terminal, which is not limited herein.

S220: Measure a first signal according to the cell discontinuous reception/transmission configuration.

The first signal may be but is not limited to a channel state information reference signal (CSI-RS), a positioning reference signal (PRS), a synchronization signal block (SSB), or the like.

Based on this, when measuring the first signal according to the cell discontinuous reception/transmission configuration, the terminal may determine, according to the cell discontinuous reception/transmission configuration, a measurement requirement (or measurement need), a signal measurement condition, and the like during signal measurement, so that the terminal can clarify a signal measurement behavior in a cell discontinuous reception/transmission mechanism, thereby ensuring reliability and high efficiency of signal measurement in the cell discontinuous reception/transmission mechanism.

In this embodiment, the terminal receives the cell discontinuous reception/transmission configuration sent by the network side device, and measures the first signal according to the cell discontinuous reception/transmission configuration, so that the terminal and the network side device can have a consistent understanding of the cell discontinuous reception/transmission configuration, and further the terminal can clarify a signal measurement behavior in a cell discontinuous reception/transmission mechanism, thereby ensuring reliability and high efficiency of signal measurement in the cell discontinuous reception/transmission mechanism.

FIG. 3 is a schematic flowchart of a signal measurement method 300 according to an example embodiment of this application. The method 300 may be performed by but is not limited to a terminal, and may be specifically performed by hardware or software installed in the terminal. In this embodiment, the method 300 may include at least the following steps.

S310: The terminal receives a cell discontinuous reception/transmission configuration sent by a network side device.

S320: Measure a first signal according to the cell discontinuous reception/transmission configuration.

It may be understood that, in addition to referring to the related descriptions in the foregoing method embodiment 200 for the implementation process of S310-S320, in a possible implementation, if the terminal measures the first signal according to the cell discontinuous reception/transmission configuration, the measurement requirement corresponding to the first signal may be related to the cell discontinuous reception/transmission configuration. That is, the terminal may determine, according to the cell discontinuous reception/transmission configuration, the measurement requirement corresponding to the first signal, so that signal sending on a network side (for example, a base station) can be reduced, and energy saving on the network side can be achieved.

For this purpose, in a possible implementation, the measurement requirement may include but is not limited to at least one of the following (11) and (12).

(11) An evaluation period requirement for evaluating, by the terminal, a first object.

The first object includes at least one of layer 1-reference signal received power (L1-RSRP), L1-signal-to-noise and interference ratio (SINR), radio link monitoring (RLM), beam failure detection (BFD), candidate beam detection (CBD), and radio resource management (RRM).

Therefore, for the valuation period requirement for evaluating the first object, a related parameter involved may include but is not limited to a signal period of the first signal, a reporting period of a measurement result corresponding to the first signal, and the like.

(12) An evaluation result reporting interval requirement for evaluating, by the terminal, a second object, that is, a reporting interval requirement of an evaluation result reported by a physical layer of the terminal to a medium access control (MAC) layer. In this embodiment, the second object includes RLM or BFD.

Therefore, for the evaluation result reporting interval requirement for evaluating the second object, a related parameter involved may include but is not limited to a signal period of the first signal, a reporting period of a measurement result corresponding to the first signal, and the like.

Based on this, in a possible implementation, considering that the measurement requirement corresponding to the first signal is related to the cell discontinuous reception/transmission configuration information, the terminal may determine, according to the cell discontinuous reception/transmission configuration, the measurement requirement corresponding to the first signal. For example, the terminal determines, according to the cell discontinuous reception/transmission configuration and a measurement requirement corresponding to a first scenario, a measurement requirement corresponding to a second scenario. In this way, signal sending on a network side (for example, a base station) can be reduced, and energy saving on the network side can be achieved.

The first scenario is a scenario that meets a first condition and is not configured with the cell discontinuous reception/transmission configuration, and the second scenario is a scenario that meets the first condition and is configured with the cell discontinuous reception/transmission configuration.

Optionally, in this embodiment, to implement accurate classification of the measurement requirement, the first condition may include but is not limited to any one of the following (21) and (22):

(21) a terminal discontinuous reception configuration is not configured; and

(22) the terminal discontinuous reception configuration is configured and a related parameter of the terminal discontinuous reception configuration is within a predetermined range. The related parameter of the terminal discontinuous reception configuration may be a terminal discontinuous reception cycle. Assuming that the related parameter may be a terminal discontinuous reception cycle, the predetermined range may be but is not limited to not more than 320 milliseconds (ms), or greater than 320 ms, which is not limited herein.

For this reason, combinations of the first scenario and the second scenario provided in this application may include but are not limited to the following several cases.

The first scenario is not configured with the terminal discontinuous reception configuration and the cell discontinuous reception/transmission configuration; and the second scenario is not configured with the terminal discontinuous reception configuration but is configured with the cell discontinuous reception/transmission configuration.

The first scenario is configured with the terminal discontinuous reception configuration but is not configured with the cell discontinuous reception/transmission configuration; and the second scenario is configured with the terminal discontinuous reception configuration and the cell discontinuous reception/transmission configuration.

For the first scenario and the second scenario, a process in which the terminal determines, according to the cell discontinuous reception/transmission configuration and the measurement requirement corresponding to the first scenario, the measurement requirement corresponding to the second scenario may include: first determining a second parameter according to the cell discontinuous reception/transmission period in the cell discontinuous reception/transmission configuration and a first parameter (for example, the signal period of the first signal or the reporting period of the measurement result corresponding to the first signal) in the measurement requirement corresponding to the first scenario, and then replacing the first parameter in the measurement requirement corresponding to the first scenario with the second parameter to obtain the measurement requirement corresponding to the second scenario.

The second parameter T may be obtained by using at least one of the following formula (1) and formula (2):

$$T = \max(T1, T2) \qquad\qquad (1)$$

$$T = \max(T1, T2)/\text{Ceiling}(D/T1) \qquad\qquad (2)$$

where T1 is the signal period of the first signal in the first scenario or the reporting period of the measurement result corresponding to the first signal, T2 is the cell discontinuous reception/transmission period, D is active period on duration of the cell continuous reception/transmission, and Ceiling indicates rounding up.

It should be noted that if the terminal obtains two second parameters based on the formula (1) and the formula (2), the terminal may select a larger value or a smaller value or any value of the two second parameters as a target value in a manner such as protocol agreement or network side configuration, and further replace, based on the target value, the first parameter in the measurement requirement corresponding to the first scenario to obtain the measurement requirement in the second scenario.

In addition, when the measurement requirement corresponding to the first signal is determined, the signal period of the first signal and the cell discontinuous reception/transmission period have an integer multiple relationship. Alternatively, the reporting period of the measurement result corresponding to the first signal and the cell discontinuous reception/transmission period have an integer multiple relationship. Therefore, the active period and the first signal can be in a consistent time interval, thereby reducing a delay measured by the terminal.

In this embodiment, a method for determining a signal measurement requirement in a cell discontinuous reception/transmission mechanism is provided, so that a time requirement during signal measurement can be adaptively relaxed, and complexity of terminal measurement can be simplified.

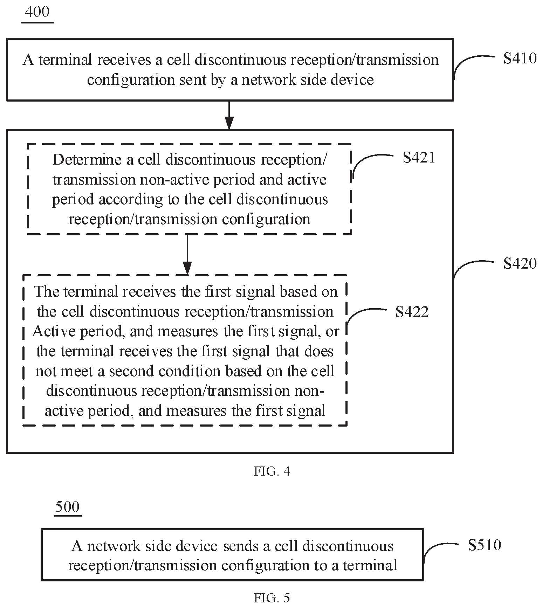

FIG. 4 is a schematic flowchart of a signal measurement method 400 according to an example embodiment of this application. The method 400 may be performed by but is not limited to a terminal, and may be specifically performed by hardware or software installed in the terminal. In this embodiment, the method 400 may include at least the following steps.

S410: The terminal receives a cell discontinuous reception/transmission configuration sent by a network side device.

S420: Measure a first signal according to the cell discontinuous reception/transmission configuration.

It may be understood that, for an implementation process of S410-S420, in addition to referring to the related descriptions in the foregoing method embodiment 200 or 300, in a possible implementation, referring to FIG. 4 again, a process in which the terminal measures the first signal according to the cell discontinuous reception/transmission configuration may further include the following content.

S421: Determine a cell discontinuous reception/transmission non-active period and active period according to the cell discontinuous reception/transmission configuration.

For the cell discontinuous reception/transmission non-active period and active period, the terminal does not expect that the first signal that meets the second condition is to be sent in the cell discontinuous reception/transmission non-active period, that is, the terminal expects that the first signal that does not meet the second condition is to be sent in the cell discontinuous reception/transmission non-active period, so as to ensure signal measurement quality.

Optionally, in this embodiment, the second condition may include but is not limited to at least one of the following (31) to (34).

(31) A signal type of the first signal belongs to a first-type signal set. That is, the terminal does not expect that a first signal whose signal type belongs to the first-type signal set is to be sent in the cell discontinuous reception/transmission non-active period, thereby avoiding a problem that a first signal of the signal type fails to be sent.

The signal type in the first-type signal set may include but is not limited to at least one of the following (311) to (316).

(311) a signal used for channel state information reporting (CSI reporting), where the CSI reporting includes specific content and is used for specific measurements. The specific content includes at least one of a rank indicator (RI), a precoding matrix indicator (PMI), L1-RSRP, and L1-SINR; and the specific measurement includes channel measurement or interference measurement.

In an implementation, the CSI-RS may include a non-zero-power (NZP-CSI-RS) NZP-CSI-RS or CSI-interference measurement (IM), where the NZP-CSI-RS may be used for signal measurement of a current cell, and the CSI-IM is used for interference measurement of a neighboring cell.

(312) A signal used for RLM.
(313) A signal used for BFD.
(314) A signal used for CBD.
(315) A signal used for RRM.
(316) A signal used for time-frequency tracing.
(32) The first signal is a signal sent by a serving cell, and a cell identity (Cell ID) associated with the first signal is an ID of the serving cell. That is, the terminal does not expect that a first signal sent by the serving cell is to be sent in the cell discontinuous reception/transmission non-active period, thereby avoiding a problem that the first signal fails to be sent.
(33) The first signal is a signal sent by a target cell, and the target cell is a cell controlled by cell discontinuous reception/transmission. That is, the terminal does not expect that a first signal sent by a cell controlled by cell discontinuous reception/transmission is to be sent in the cell discontinuous reception/transmission non-active period, thereby avoiding a problem that the first signal fails to be sent.
(34) The first signal is controlled by discontinuous reception/transmission or a time domain location of the first signal is controlled by discontinuous reception/transmission. That is, the terminal does not expect that a first signal controlled by cell discontinuous reception/transmission is to be sent in the cell discontinuous reception/transmission non-active period, thereby avoiding a problem that the first signal fails to be sent.

The second condition may be implemented in a manner of protocol agreement, higher layer configuration, network side configuration, and terminal autonomous determining, which is not limited herein.

In an implementation, to determine whether the first signal meets the second condition, such as (32) to (35) in the foregoing second condition, and improve measurement efficiency and reliability of signal measurement, the terminal may further receive first configuration information sent by the network side device. The first configuration information includes at least one of the following (41) to (44):

(41) first information, used to indicate whether a type of the first signal is controlled by cell discontinuous reception/-transmission;
(42) second information, used to indicate a cell list controlled by cell discontinuous reception/transmission;
(43) third information, used to indicate time domain configuration information controlled by cell discontinuous reception/transmission;
where, for example, if a first signal received at a time domain location corresponding to the time domain configuration information meets the second condition; otherwise, the first signal does not meet the second condition; and
(44) fourth information, used to indicate time domain configuration information that the terminal does not expect to be used for sending the first signal.

Optionally, in this embodiment, the first configuration information is configured according to a predetermined granularity, where the predetermined granularity includes at least one of a signal type granularity, a terminal granularity, a serving cell granularity, a serving cell group granularity, a resource granularity, and a report config granularity. Therefore, configuration flexibility of the first configuration information can be ensured, and different communication scenarios are met.

S422: The terminal receives the first signal based on the cell discontinuous reception/transmission active period, and measuring the first signal, or receiving, by the terminal, the first signal that does not meet a second condition based on the cell discontinuous reception/transmission non-active period, and measuring the first signal.

That is, when the terminal measures the first signal, the terminal measures a first signal received based on the cell discontinuous reception/transmission active period, and measures only a first signal that does not meet the second condition for a first signal received based on the cell discontinuous reception/transmission non-active period. Therefore, reliability of signal measurement is improved.

In this embodiment, the terminal measures the first information based on the active period or measures the first signal that does not meet the second condition based on the non-active period by determining the cell discontinuous reception/transmission active period or non-active period. Therefore, the terminal can not only clarify a signal measurement behavior in the cell discontinuous reception/transmission mechanism, but also improve signal measurement efficiency.

Based on the description of the signal measurement method in the foregoing method embodiments 200-400, the following exemplarily describes the technical solutions provided in this application with reference to examples 1 to 4, and content is as follows: It is assumed that the first signal is a CSI-RS or an SSB.

Example 1

For a CSI-RS used for RLM, it is assumed that in a radio link monitoring configuration (RadioLinkMonitoringConfig), a measurement target of the CSI-RS is RLF, and in a case that a cell discontinuous reception/transmission (cell DTX/DRX) configuration is not configured, a measurement requirement of a measurement period corresponding to the CSI-RS is related to a terminal discontinuous reception (UE DRX) configuration. For example, in a case of a frequency range (FR) 1, Table 1 shows a correspondence between an evaluation period $T_{Evaluate\_out\_CSI-RS}$ and $T_{Evaluate\_in\_CSI-RS}$.

**Table 1**

| Configuration | $T_{Evaluate\_out\_CSI-RS}$ (ms) | $T_{Evaluate\_in\_CSI-RS}$ (ms) |
|---|---|---|
| Not configured (non) DRX | $Max(200, Ceil(Mout \times P) \times T_{CSI-RS})$ | $Max(100, Ceil(Min \times P) \times T_{CSI-RS})$ |
| DRX ≤ 320 ms | $Max(200, Ceil(1.5 \times Mout \times P) \times Max(T_{DRX}, T_{CSI-RS}))$ | $Max(100, Ceil(1.5 \times Min \times P) \times Max(T_{DRX}, T_{CSI-RS}))$ |
| DRX > 320 ms | $Ceil(Mout \times P) \times T_{DRX}$ | $Ceil(Min \times P) \times T_{DRX}$ |
| Note: $T_{CSI-RS}$ is a signal period of the CSI-RS configured for RLM. The measurement requirement in Table 1 is applicable to $T_{CSI-RS}$ equal to 5 ms, 10 ms, 20 ms, or 40 ms. $T_{DRX}$ is a period length of DRX. | | |

When the cell DTX/DRX configuration is configured, the terminal does not expect to measure the CSI-RS in the cell DTX/DRX non-active period. That is, $T_{CSI-RS}$ in Table 1 is replaced with $T'_{CSI-RS}=Max(T_{CSI-RS}, T_{DTX})$, or $T'_{CSI-RS}=max(T_{CSI-RS}, T_{DTX})/Ceil(D_{DTXon}/T_{CSI-RS})$, to obtain measurement requirements in scenarios in which DRX+cell DTX are not configured, DRX<=320 ms+cell DTX, and DRX>320 ms+cell DTX.

In addition, when the cell DTX/DRX configuration is not configured, a time interval at which the terminal can report to a higher layer needs to meet a requirement. That is, when UE DRX configuration is not configured, a time interval for reporting an evaluation result of RLF evaluation is at least $Max(10ms, T_{RLM-RS,M})$, where $T_{RLM-RS,M}$ is a minimum value of signal periods of all signals (including an SSB and a CSI-RS) configured for RLM.

When UE DRX is configured and UE DRX cycle<=320 ms, the time interval for reporting the evaluation result of RLF evaluation is at least $Max(10ms, 1.5 \times DRX\_cycle\_length, 1.5 \times T_{RLM-RS,M}))$.

When UE DRX is configured and UE DRX cycle>320 ms, the time interval is at least the DRX cycle.

When cell DTX/DRX is configured, $T_{RLM-RS,M}=Min(Min(T_{RLM-SSB,M}), Min(max(T_{RLM-CSI-RS,m}, T_{DTX})))$, to obtain measurement requirements in scenarios in which DRX+cell DTX are not configured, DRX<=320 ms+cell DTX, and DRX>320 ms+cell DTX.

Optionally, when UE DRX is not configured and cell DTX/DRX is configured, the terminal reports a link quality evaluation result to the higher layer at an interval of an indication period (, which may also be referred to as a (reporting period)) from the physical layer. The terminal determines the indication period as a maximum value of the following parameters: a specific period value (for example, 10 ms) and a smaller value of a parameter 1 and a parameter 2, where the parameter 1 is a period of all SSBs configured as RLM, and the parameter 2 is a period of all CSI-RSs configured as RLM, which is a maximum value obtained after comparison with the cell DTX/DRX.

When UE DRX is not configured and cell DTX/DRX is configured, the terminal reports a link quality evaluation result to the higher layer at an interval of an indication period from the physical layer. The terminal determines the indication period as a maximum value of the following parameters: a UE DRX period and a smaller value of a parameter 1 and a parameter 2, where the parameter 1 is a period of all SSBs configured as RLM, and the parameter 2 is a period of all CSI-RSs configured as RLM, which is a maximum value obtained after comparison with the cell DTX/DRX.

Example 2

For a CSI-RS used for L1-RSRP reporting, a corresponding associated reporting parameter includes a CSI-RS configured for reporting CSI of L1-RSRP/L1-SINR, and a measurement period requirement thereof is shown in Table 1.

**Table 9.5.4.2-1: Measurement period TL1-RSRP_Measurement_Period_CSI-RS for FR1**

| Configuration | $T_{L1\text{-}RSRP\_Measurement\_Period\_CSI\text{-}RS}$ (ms) |
|---|---|
| non-DRX | $Max(T_{Report}, ceil(M*P)*T_{CSI\text{-}RS})$ |
| DRX cycle $\leq$ 320 ms | $max(T_{Report}, ceil(K*M*P)*Max(T_{DRX}, T_{CSI\text{-}RS}))$ |
| DRX cycle > 320 ms | $ceil(M*P)*T_{DRX}$ |
| Note 1: $T_{CSI\text{-}RS}$ is a period of a CSI-RS used for L1-RSRP measurement, $T_{DRX}$ is a period length of DRX, and $T_{Report}$ is a reporting period of a measurement report. Note 2: The foregoing measurement requirement shown in Table 2 is applicable to transmission of a CSI-RS resource configured for L1-RSRP measurement with a density of 3. Note 3: When $T_{CSI\text{-}RS} \leq$ 40 ms and a high speed measurement indication configuration is configured (highSpeed-MeasFlag-r16) [or highSpeedMeasFlag-r17], K = 1. Otherwise, K = 1.5. Note 4: When highSpeedMeasFlag-r16 is configured, the foregoing measurement requirement is applicable only to a terminal that supports a measurement enhancement manner, where the measurement enhancement manner may be measurementEnhancement-r16, intra NR (intraNR)-MeasurementEnhancement-r16, or HST measurementEnhancement-r17. | |

When cell DTX/DRX is configured, the terminal does not expect to measure the CSI-RS in the cell DTX/DRX non-active period. That is, $T_{CSI\text{-}RS}$ in Table 2 is replaced with $T'_{CSI\text{-}RS}=Max(T_{CSI\text{-}RS}, T_{DTX})$, or $T'_{CSI\text{-}RS}=Max(T_{CSI\text{-}RS}, T_{DTX})/Ceil(D_{DTXon}/T_{CSI\text{-}RS})$ and $T_{Report}$ are replaced with T'report=Max(Treport, $T_{cellDRX}$), or T'report=Max(Treport, $T_{cellDRX})/Ceil(D_{cellDRXon}/$ Treport), to obtain measurement requirements in scenarios in which non DRX+cell DTX, DRX<=320 ms+cell DTX, and DRX>320 ms+cell DTX.

Example 3

It is assumed that for a CSI-RS used for RRM, the CSI-RS may include a CSI-RS of a serving cell and a CSI-RS of a neighboring cell. Then, if the terminal receives a cell DTX/DRX configuration (such as a cell DTX/DRX pattern) of the serving cell, and the CSI-RS used for RRM is configured to be affected by cell DTX/DRX, the terminal does not send an RRM CSI-RS associated with a serving cell ID or a configured cell list in the non-active period, and the terminal does not perform measurement.

Example 4

It is assumed that for a CSI-RS used for CSI-reporting or L1-SINR reporting, the CSI-RS may include a CSI-RS used for channel measurement and a CSI-RS used for interference measurement, where the CSI-RS used for interference measurement is classified into two types, NZP CSI-RS and CSI RS-IM. Then, a plurality of types of CSI-RSs are associated with a same report config are differently affected by Cell DTX/DRX.

For example, the terminal does not expect that the CSI-RS used for channel measurement or the NZP CSI-RS used for interference measurement is to be sent in the Cell DTX non-active period, so that measurement is not performed, and the CSI-RS IM used for interference measurement performs normal measurement.

In other words, corresponding to a CSI report configured with Cell DTX/DRX, if a CSI-RS used for channel measurement and a CSI-IM RS used for interference measurement are configured, a CSI-RS associated with the CSI report is a CSI-RS used for channel measurement of a nearest active period before a CSI-RS reference resource and a nearest CSI-RS IM used for interference measurement.

FIG. 5 is a schematic flowchart of a signal measurement method 500 according to an example embodiment of this application. The method 500 may be performed by but is not limited to a terminal, and may be specifically performed by hardware or software installed in the terminal. In this embodiment, the method 500 may include at least the following steps.

S510: A network side device sends a cell discontinuous reception/transmission configuration to a terminal.

The cell discontinuous reception/transmission configuration is related to signal measurement performed by the terminal.

Optionally, the method further includes: sending first configuration information to the terminal, where the first configuration information includes at least one of the following:

first information, used to indicate whether a type of a first signal is controlled by cell discontinuous reception/transmission; second information, used to indicate a cell list cell list controlled by cell discontinuous reception/transmission; third information, used to indicate time domain configuration information controlled by cell discontinuous reception/transmission; and fourth information, used to indicate time domain configuration information that the terminal does not expect to be used for sending the first signal.

Optionally, the first configuration information is configured according to a predetermined granularity, and the predetermined granularity includes at least one of a signal type granularity, a terminal granularity, a serving cell granularity, a serving cell group granularity, a resource granularity, and a measurement report granularity.

It may be understood that implementations in the method embodiment 500 have same or corresponding technical features as implementations in the foregoing method embodiments 200-400. Therefore, for related descriptions of implementations in the method embodiment 500, references may be made to related descriptions in implementations in the foregoing method embodiments 200-400, and same or corresponding technical effects are achieved. To avoid repetition, details are not described herein again.

The signal measurement method provided in this embodiment of this application may alternatively be performed by a measurement apparatus. In an embodiment of this application, a measurement apparatus provided in an embodiment of this application is described by using an example in which the measurement apparatus performs the measurement method.

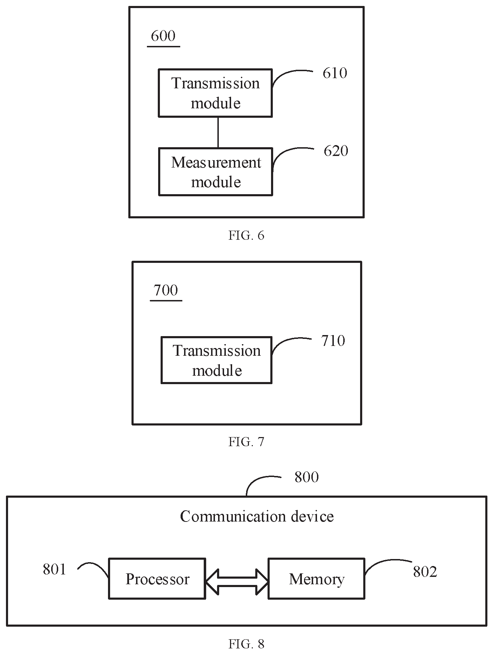

FIG. 6 is a schematic structural diagram of a signal measurement apparatus 600 according to an embodiment of this application. The apparatus 600 includes a transmission module 610, configured to receive a cell discontinuous reception/transmission configuration sent by a network side device; and a measurement module 620, configured to measure a first signal according to the cell discontinuous reception/transmission configuration.

Optionally, a measurement requirement corresponding to the first signal is related to the cell discontinuous reception/transmission configuration, and the measurement requirement includes at least one of the following: an evaluation period requirement for evaluating, by the terminal, a first object; and an evaluation result reporting interval requirement for evaluating, by the terminal, a second object.

Optionally, the first object includes at least one of layer 1-reference signal received power L1-RSRP, L1-signal-to-noise and interference ratio SINR, radio link monitoring RLM, beam failure detection BFD, candidate beam detection CBD, and radio resource management RRM; or the second object includes RLM or BFD.

Optionally, that a measurement requirement corresponding to the first signal is related to the cell discontinuous reception/transmission configuration information includes: determining, according to the cell discontinuous reception/transmission configuration and a measurement requirement corresponding to a first scenario, a measurement requirement corresponding to a second scenario; where the first scenario is a scenario that meets a first condition and is not configured with the cell discontinuous reception/transmission configuration, and the second scenario is a scenario that meets the first condition and is configured with the cell discontinuous reception/transmission configuration.

Optionally, the first condition includes any one of the following: a terminal discontinuous reception configuration is not configured; and the terminal discontinuous reception configuration is configured and a related parameter of the terminal discontinuous reception configuration is within a predetermined range.

Optionally, the determining, by the measurement module according to the cell discontinuous reception/transmission configuration and a measurement requirement corresponding to a first scenario, a measurement requirement corresponding to a second scenario includes: determining a second parameter according to a cell discontinuous reception/transmission period in the cell discontinuous reception/transmission configuration and a first parameter in the measurement requirement corresponding to the first scenario, where the first parameter includes a signal period of the first signal or a reporting period of a measurement result corresponding to the first signal; and replacing the first parameter in the measurement requirement corresponding to the first scenario with the second parameter, to obtain the measurement requirement corresponding to the second scenario.

Optionally, the second parameter includes at least one of the following: $T=\max(T1, T2)$; and $T=\max(T1, T2)/\text{Ceiling}(D/T1)$, where T is the second parameter, T1 is the signal period of the first signal in the first scenario or the reporting period of the measurement result corresponding to the first signal, T2 is the cell discontinuous reception/transmission period, D is active period on duration of the cell continuous reception/transmission, and Ceiling indicates rounding up.

Optionally, the signal period of the first signal and the cell discontinuous reception/transmission period have an integer multiple relationship; or the reporting period of the measurement result corresponding to the first signal and the cell discontinuous reception/transmission period have an integer multiple relationship.

Optionally, the measuring, by the measurement module 620, a first signal according to the cell discontinuous reception/transmission configuration includes: determining a cell discontinuous reception/transmission non-active period non-active period and active period active period according to the cell discontinuous reception/transmission configuration; and receiving the first signal based on the cell discontinuous reception/transmission active period, and measuring the first signal, or receiving, by the terminal, the first signal that does not meet a second condition based on the cell discontinuous reception/transmission non-active period, and measuring the first signal.

Optionally, the terminal does not expect that the first signal that meets the second condition is to be sent in the cell discontinuous reception/transmission non-active period non-active period.

Optionally, the second condition includes at least one of the following: a signal type of the first signal belongs to a first-type signal set; the first signal is a signal sent by a serving cell serving cell; the first signal is a signal sent by a target cell, and the target cell is a cell controlled by cell discontinuous reception/transmission; and the first signal is controlled by discontinuous reception/transmission or a time domain location of the first signal is controlled by discontinuous reception/transmission.

Optionally, a signal type in the first-type signal set includes at least one of the following: a signal used for channel state information reporting CSI reporting, where the CSI reporting includes specific content and is used for specific measurements; a signal used for RLM; a signal used for BFD; a signal used for CBD; a signal used for RRM; and a signal used for time-frequency tracing Tracking.

Optionally, the specific content includes at least one of a rank indicator RI, a precoding matrix indicator PMI, L1-RSRP, and L1-SINR; or the specific measurement includes channel measurement or interference measurement.

Optionally, the transmission module 610 is further configured to: receive first configuration information, where the first configuration information includes at least one of the following: first information, used to indicate whether a type of the first signal is controlled by cell discontinuous reception/transmission; second information, used to indicate a cell list cell list controlled by cell discontinuous reception/transmission; third information, used to indicate time domain configuration information controlled by cell discontinuous reception/transmission; and fourth information, used to indicate time domain configuration information that the terminal does not expect to be used for sending the first signal.

Optionally, the first configuration information is configured according to a predetermined granularity, and the predetermined granularity includes at least one of a signal type granularity, a terminal granularity, a serving cell granularity, a serving cell group granularity, a resource granularity, and a measurement report granularity.

The signal measurement apparatus 600 in this embodiment of this application may be an electronic device, for example, an electronic device with an operating system, or may be a component such as an integrated circuit or a chip in an electronic device. The electronic device may be a terminal, or may be another device different from a terminal. For example, the terminal can include but is not limited to the foregoing listed types of the terminal 11. The another device can be a server, a network attached storage (NAS), or the like. This is not specifically limited in embodiments of this application.

The signal measurement apparatus 600 provided in this embodiment of this application can implement the processes implemented in the method embodiments of FIG. 2 to FIG. 4, and achieve the same technical effects. To avoid repetition, details are not described herein again.

FIG. 7 is a schematic structural diagram of a signal measurement apparatus 700 according to an embodiment of this application. The apparatus 700 includes: a transmission module 710, configured to send a cell discontinuous reception/transmission configuration to a terminal; where the cell discontinuous reception/transmission configuration is related to signal measurement performed by the terminal.

Optionally, the transmission module is further configured to send first configuration information to the terminal, where the first configuration information includes at least one of the following: first information, used to indicate whether a type of a first signal is controlled by cell discontinuous reception/transmission; second information, used to indicate a cell list cell list controlled by cell discontinuous reception/transmission; third information, used to indicate time domain configuration information controlled by cell discontinuous reception/transmission; and fourth information, used to indicate time domain configuration information that the terminal does not expect to be used for sending the first signal.

Optionally, the first configuration information is configured according to a predetermined granularity, and the predetermined granularity includes at least one of a signal type granularity, a terminal granularity, a serving cell granularity, a serving cell group granularity, a resource granularity, and a measurement report granularity.

The signal measurement apparatus 700 in this embodiment of this application may be an electronic device, for example, an electronic device with an operating system, or may be a component such as an integrated circuit or a chip in an electronic device. The electronic device may be a network side device, or may be another device other than the terminal. For example, the network side device may include but is not limited to the types of the network side device 12 listed above, and the another device may be a server, a network attached storage (NAS), or the like. This is not specifically limited in the embodiments of this application.

The signal measurement apparatus 700 provided in this embodiment of this application can implement the processes implemented in the method embodiment of FIG. 5, and achieve the same technical effects. To avoid repetition, details are not described herein again.

As shown in FIG. 8, an embodiment of this application further provides a communication device 800, including a processor 801 and a memory 802. The memory 802 stores a program or instructions capable of running on the processor 801. For example, when the communication device 800 is a terminal, the program or the instructions are executed by the processor 801 to implement the steps in the foregoing embodiments of the signal measurement method, and same technical effects can be achieved. When the communication device 800 is a network side device, the program or the instructions are executed by the processor 801 to implement the steps in the foregoing embodiment of the signal measurement method, and same technical effects can be achieved. To avoid repetition, details are not described herein again.

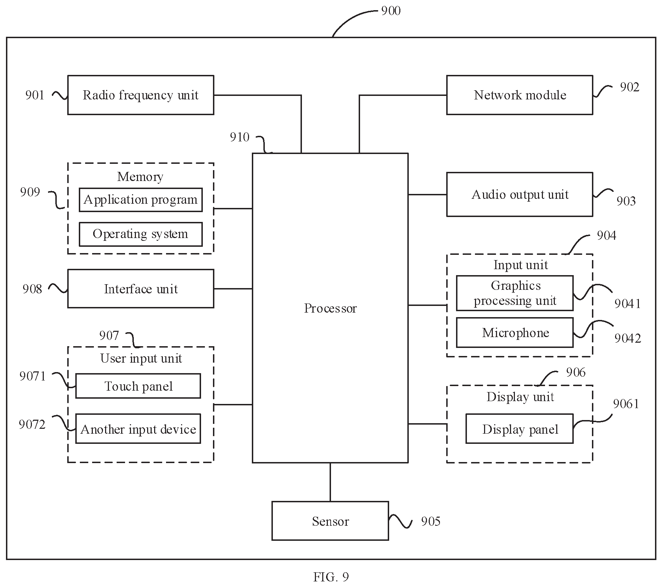

An embodiment of this application further provides a terminal, including a processor and a communication interface. The communication interface is coupled to the processor. The processor is configured to run a program or instructions to implement the steps in the method embodiment shown in FIG. 2 to FIG. 4. The terminal embodiment corresponds to the foregoing terminal-side method embodiment. Each implementation process and implementation of the foregoing method embodiment may be applied to the terminal embodiment, and same technical effects can be achieved. Specifically, FIG. 9 is a schematic diagram of a hardware structure of a terminal for implementing an embodiment of this application.

A terminal 900 includes but is not limited to at least some components in a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the terminal 900 may further include a power supply (for example, a battery) that supplies power to each component. The power supply may be logically connected to the processor 910 by using a power management system, to implement functions such as charging management, discharging management, and power consumption management through the power management system. The structure of the terminal shown in FIG. 9 does not constitute a limitation on the terminal. The terminal may include more or fewer components than those shown in the figure, or combine some components, or have different component arrangements. Details are not described herein again.

It should be understood that in this embodiment of this application, the input unit 904 may include a graphics processing unit (GPU) 9041 and a microphone 9042. The graphics processing unit 9041 processes image data of a still picture or a video obtained by an image capture apparatus (for example, a camera) in a video capture mode or an image capture mode. The display unit 906 may include a display panel 9061, and the display panel 9061 may be configured in a form of a liquid crystal display, an organic light-emitting diode, or the like. The user input unit 907 includes at least one of a touch panel 9071 and another input device 9072. The touch panel 9071 is also referred to as a touchscreen. The touch panel 9071 may include two parts: a touch detection apparatus and a touch controller. The another input device 9072 may include but is not limited to a physical keyboard, a function key (such as a volume control key or an on/off key), a trackball, a mouse, and a joystick. Details are not described herein again.

In this embodiment of this application, after receiving downlink data from a network side device, the radio frequency unit 901 may transmit the downlink data to the processor 910 for processing. In addition, the radio frequency unit 901 may send uplink data to the network side device. Generally, the radio frequency unit 901 includes but is not limited to an antenna, an amplifier, a transceiver, a coupler, a low-noise amplifier, a duplexer, and the like.

The memory 909 may be configured to store a software program or instructions and various types of data. The memory 909 may mainly include a first storage area for storing a program or instructions and a second storage area for storing data. The first storage area may store an operating system, an application program or instructions required by at least one function (for example, a sound play function or an image play function), and the like. In addition, the memory 909 may include a volatile memory or a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synch link dynamic random access memory (SLDRAM), and a direct rambus random access memory (DRRAM). The memory 909 in this embodiment of this application includes but is not limited to these memories and any other suitable type of memory.

The processor 910 may include one or more processing units. Optionally, the processor 910 integrates an application processor and a modem processor. The application processor mainly processes operations related to an operating system, a user interface, an application program, and the like. The modem processor mainly processes a wireless communication signal, such as a baseband processor. It may be understood that the modem processor may not be integrated into the processor 910.

The radio frequency unit 901 is configured to receive a cell discontinuous reception/transmission configuration sent by a network side device; and the network module 902 is configured to measure a first signal according to the cell discontinuous reception/transmission configuration.

Optionally, a measurement requirement corresponding to the first signal is related to the cell discontinuous reception/transmission configuration, and the measurement requirement includes at least one of the following: an evaluation period requirement for evaluating, by the terminal, a first object; and an evaluation result reporting interval requirement for evaluating, by the terminal, a second object.

Optionally, the first object includes at least one of layer 1-reference signal received power L1-RSRP, L1-signal-to-noise and interference ratio SINR, radio link monitoring RLM, beam failure detection BFD, candidate beam detection CBD, and radio resource management RRM; or the second object includes RLM or BFD.

Optionally, that a measurement requirement corresponding to the first signal is related to the cell discontinuous reception/transmission configuration information includes: determining, according to the cell discontinuous reception/-transmission configuration and a measurement requirement corresponding to a first scenario, a measurement requirement corresponding to a second scenario; where the first scenario is a scenario that meets a first condition and is not configured with the cell discontinuous reception/transmission configuration, and the second scenario is a scenario that meets the first condition and is configured with the cell discontinuous reception/transmission configuration.

Optionally, the first condition includes any one of the following: a terminal discontinuous reception configuration is not configured; and the terminal discontinuous reception configuration is configured and a related parameter of the terminal discontinuous reception configuration is within a predetermined range.

Optionally, the determining, by the processor 910 according to the cell discontinuous reception/transmission configuration and a measurement requirement corresponding to a first scenario, a measurement requirement corresponding to a second scenario includes: determining a second parameter according to a cell discontinuous reception/-transmission period in the cell discontinuous reception/transmission configuration and a first parameter in the measurement requirement corresponding to the first scenario, where the first parameter includes a signal period of the first signal or a reporting period of a measurement result corresponding to the first signal; and replacing the first parameter in the measurement requirement corresponding to the first scenario with the second parameter, to obtain the measurement requirement corresponding to the second scenario.

Optionally, the second parameter includes at least one of the following: T=max(T1, T2); and T=max(T1, T2)/Ceiling(D/T1), where T is the second parameter, T1 is the signal period of the first signal in the first scenario or the reporting period of the measurement result corresponding to the first signal, T2 is the cell discontinuous reception/-transmission period, D is active period on duration of the cell continuous reception/transmission, and Ceiling indicates rounding up.

Optionally, the signal period of the first signal and the cell discontinuous reception/transmission period have an integer multiple relationship; or the reporting period of the measurement result corresponding to the first signal and the cell discontinuous reception/transmission period have an integer multiple relationship.

Optionally, the measuring, by the processor 910, a first signal according to the cell discontinuous reception/-transmission configuration includes: determining a cell discontinuous reception/transmission non-active period non-active period and active period active period according to the cell discontinuous reception/transmission configuration; and receiving the first signal based on the cell discontinuous reception/transmission active period, and measuring the first signal, or receiving, by the terminal, the first signal that does not meet a second condition based on the cell discontinuous reception/transmission non-active period, and measuring the first signal.

Optionally, the terminal does not expect that the first signal that meets the second condition is to be sent in the cell discontinuous reception/transmission non-active period non-active period.

Optionally, the second condition includes at least one of the following: a signal type of the first signal belongs to a first-type signal set; the first signal is a signal sent by a serving cell serving cell; the first signal is a signal sent by a target cell, and the target cell is a cell controlled by cell discontinuous reception/transmission; and the first signal is controlled by discontinuous reception/transmission or a time domain location of the first signal is controlled by discontinuous reception/transmission.

Optionally, a signal type in the first-type signal set includes at least one of the following: a signal used for channel state information reporting CSI reporting, where the CSI reporting includes specific content and is used for specific measurements; a signal used for RLM; a signal used for BFD; a signal used for CBD; a signal used for RRM; and a signal used for time-frequency tracing Tracking.

Optionally, the specific content includes at least one of a rank indicator RI, a precoding matrix indicator PMI, L1-RSRP, and L1-SINR; or the specific measurement includes channel measurement or interference measurement.

Optionally, the radio frequency unit 901 is further configured to: receive first configuration information, where the first configuration information includes at least one of the following: first information, used to indicate whether a type of the first signal is controlled by cell discontinuous reception/transmission; second information, used to indicate a cell list cell list controlled by cell discontinuous reception/transmission; third information, used to indicate time domain configuration information controlled by cell discontinuous reception/transmission; and fourth information, used to indicate time domain configuration information that the terminal does not expect to be used for sending the first signal.

Optionally, the first configuration information is configured according to a predetermined granularity, and the predetermined granularity includes at least one of a signal type granularity, a terminal granularity, a serving cell granularity, a serving cell group granularity, a resource granularity, and a measurement report granularity.

It may be understood that for implementation processes of the implementations mentioned in this embodiment, reference may be made to related descriptions in the method embodiments 200-400, and same or corresponding technical effects are achieved. To avoid repetition, details are not described herein again.

An embodiment of this application further provides a network side device, including a processor and a communication interface. The communication interface is coupled to the processor. The processor is configured to run a program or instructions to implement the steps in the method embodiment shown in FIG. 5. The network side device embodiment corresponds to the foregoing method embodiment for the network side device. Each implementation process and implementation of the foregoing method embodiment may be applied to the network side device embodiment, and same technical effects can be achieved.

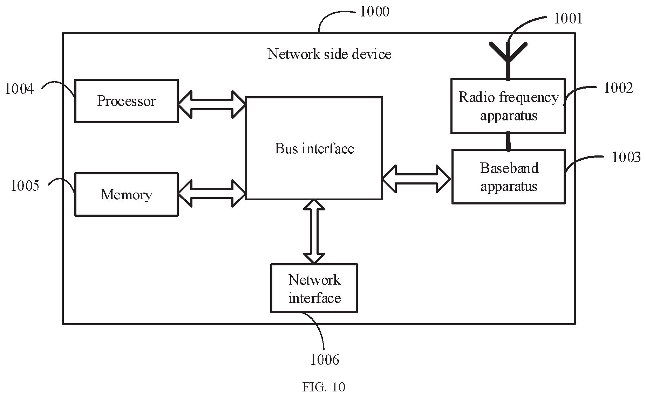

Specifically, an embodiment of this application further provides a network side device. As shown in FIG. 10, the network side device 1000 includes an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information by using the antenna 1001, and sends the received information to the baseband apparatus 1003 for processing. In a downlink direction, the baseband apparatus 1003 processes to-be-sent information, and sends processed information to the radio frequency apparatus 1002. After processing the received information, the radio frequency apparatus 1002 sends processed information by using the antenna 1001.

The method performed by the network side device in the foregoing embodiment may be implemented in the baseband apparatus 1003. The baseband apparatus 103 includes a baseband processor.

For example, the baseband apparatus 1003 may include at least one baseband board. A plurality of chips are disposed on the baseband board. As shown in FIG. 10, one of the chips is, for example, the baseband processor, and is connected to the memory 1005 by using a bus interface, to invoke a program in the memory 1005 to perform an operation of a network device shown in the foregoing method embodiment.

The network side device may further include a network interface 1006, and the interface is, for example, a common public radio interface (CPRI).

Specifically, the network side device 1000 in this embodiment of this application further includes instructions or a program stored in the memory 1005 and capable of running on the processor 1004. The processor 1004 invokes the instructions or the program in the memory 1005 to perform the method performed by the modules shown in FIG. 7, and same technical effects are achieved. To avoid repetition, details are not described herein again.

An embodiment of this application further provides a readable storage medium. The readable storage medium stores a program or instructions. When the program or the instructions are executed by a processor, the processes in the foregoing signal measurement method embodiments are implemented, and same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement the processes in the foregoing signal measurement method embodiments, and same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing signal measurement method embodiments, and same technical effects can be achieved. To avoid repetition, details are not described herein again.

An embodiment of this application further provides a wireless communication system, including a terminal and a network side device. The terminal may be configured to implement the processes of the foregoing signal measurement method embodiments 200-400. The network side device is configured to implement the processes of the foregoing signal measurement method embodiment 500. The same technical effects can be achieved. To avoid repetition, details are not described herein again.

It should be noted that in this specification, the term "include", "comprise", or any of their variants is intended to cover a non-exclusive inclusion, so that a process, method, article, or apparatus that includes a list of elements not only includes those elements but also includes other elements that are not expressly listed, or further includes elements inherent to such a process, method, article, or apparatus. Without more limitations, an element preceded by "includes a ..."

does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for enabling a terminal or a network side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

**Claims**

1. A signal measurement method, comprising:

   receiving, by a terminal, a cell discontinuous reception/transmission configuration sent by a network side device; and
   measuring a first signal according to the cell discontinuous reception/transmission configuration.

2. The method according to claim 1, wherein a measurement requirement corresponding to the first signal is related to the cell discontinuous reception/transmission configuration, and the measurement requirement comprises at least one of the following:

   an evaluation period requirement for evaluating, by the terminal, a first object; and
   an evaluation result reporting interval requirement for evaluating, by the terminal, a second object.

3. The method according to claim 2, wherein the first object comprises at least one of layer 1-reference signal received power L1-RSRP, L1-signal-to-noise and interference ratio SINR, radio link monitoring RLM, beam failure detection BFD, candidate beam detection CBD, and radio resource management RRM; or
   the second object comprises RLM or BFD.

4. The method according to any one of claims 1 to 3, wherein that a measurement requirement corresponding to the first signal is related to the cell discontinuous reception/transmission configuration information comprises:

   determining, according to the cell discontinuous reception/transmission configuration and a measurement requirement corresponding to a first scenario, a measurement requirement corresponding to a second scenario;
   wherein the first scenario is a scenario that meets a first condition and is not configured with the cell discontinuous reception/transmission configuration, and the second scenario is a scenario that meets the first condition and is configured with the cell discontinuous reception/transmission configuration.

5. The method according to claim 4, wherein the first condition comprises any one of the following:

   a terminal discontinuous reception configuration is not configured; and
   the terminal discontinuous reception configuration is configured and a related parameter of the terminal discontinuous reception configuration is within a predetermined range.

6. The method according to claim 4 or 5, wherein the determining, according to the cell discontinuous reception/transmission configuration and a measurement requirement corresponding to a first scenario, a measurement requirement corresponding to a second scenario comprises:

determining a second parameter according to a cell discontinuous reception/transmission period in the cell discontinuous reception/transmission configuration and a first parameter in the measurement requirement corresponding to the first scenario, wherein the first parameter comprises a signal period of the first signal or a reporting period of a measurement result corresponding to the first signal; and

replacing the first parameter in the measurement requirement corresponding to the first scenario with the second parameter, to obtain the measurement requirement corresponding to the second scenario.

7. The method according to claim 6, wherein the second parameter comprises at least one of the following:

$$T=\max(T1, T2);$$

and

$$T=\max(T1, T2)/\text{Ceiling}(D/T1);$$

wherein T is the second parameter, T1 is the signal period of the first signal in the first scenario or the reporting period of the measurement result corresponding to the first signal, T2 is the cell discontinuous reception/transmission period, D is active period on duration of the cell continuous reception/transmission, and Ceiling indicates rounding up.

8. The method according to any one of claims 1 to 7, wherein the signal period of the first signal and the cell discontinuous reception/transmission period have an integer multiple relationship; or
the reporting period of the measurement result corresponding to the first signal and the cell discontinuous reception/-transmission period have an integer multiple relationship.

9. The method according to any one of claims 1 to 8, wherein the measuring a first signal according to the cell discontinuous reception/transmission configuration comprises:

determining a cell discontinuous reception/transmission non-active period non-active period and active period active period according to the cell discontinuous reception/transmission configuration; and
receiving, by the terminal, the first signal based on the cell discontinuous reception/transmission active period, and measuring the first signal, or receiving, by the terminal, the first signal that does not meet a second condition based on the cell discontinuous reception/transmission non-active period, and measuring the first signal.

10. The method according to claim 9, wherein the terminal does not expect that the first signal that meets the second condition is to be sent in the cell discontinuous reception/transmission non-active period non-active period.

11. The method according to any one of claims 9 and 10, wherein the second condition comprises at least one of the following:

a signal type of the first signal belongs to a first-type signal set;
the first signal is a signal sent by a serving cell serving cell;
the first signal is a signal sent by a target cell, and the target cell is a cell controlled by cell discontinuous reception/transmission; and
the first signal is controlled by discontinuous reception/transmission or a time domain location of the first signal is controlled by discontinuous reception/transmission.

12. The method according to claim 11, wherein a signal type in the first-type signal set comprises at least one of the following:

a signal used for channel state information reporting CSI reporting, wherein the CSI reporting comprises specific content and is used for specific measurements;
a signal used for RLM;
a signal used for BFD;
a signal used for CBD;
a signal used for RRM; and
a signal used for time-frequency tracing Tracking.

13. The method according to claim 12, wherein the specific content comprises at least one of a rank indicator RI, a precoding matrix indicator PMI, L1-RSRP, and L1-SINR; or
the specific measurement comprises channel measurement or interference measurement.

14. The method according to any one of claims 1 to 13, wherein the method further comprises:

   receiving, by the terminal, first configuration information;
   wherein the first configuration information comprises at least one of the following:

      first information, used to indicate whether a type of the first signal is controlled by cell discontinuous reception/transmission;
      second information, used to indicate a cell list cell list controlled by cell discontinuous reception/transmission;
      third information, used to indicate time domain configuration information controlled by cell discontinuous reception/transmission; and
      fourth information, used to indicate time domain configuration information that the terminal does not expect to be used for sending the first signal.

15. The method according to claim 14, wherein the first configuration information is configured according to a predetermined granularity, and the predetermined granularity comprises at least one of a signal type granularity, a terminal granularity, a serving cell granularity, a serving cell group granularity, a resource granularity, and a measurement report granularity.

16. A signal measurement method, comprising:

   sending, by a network side device, a cell discontinuous reception/transmission configuration to a terminal;
   wherein the cell discontinuous reception/transmission configuration is related to signal measurement performed by the terminal.

17. The method according to claim 16, wherein the method further comprises:

   sending first configuration information to the terminal;
   wherein the first configuration information comprises at least one of the following:

      first information, used to indicate whether a type of a first signal is controlled by cell discontinuous reception/transmission;
      second information, used to indicate a cell list cell list controlled by cell discontinuous reception/transmission;
      third information, used to indicate time domain configuration information controlled by cell discontinuous reception/transmission; and
      fourth information, used to indicate time domain configuration information that the terminal does not expect to be used for sending the first signal.

18. The method according to claim 17, wherein the first configuration information is configured according to a predetermined granularity, and the predetermined granularity comprises at least one of a signal type granularity, a terminal granularity, a serving cell granularity, a serving cell group granularity, a resource granularity, and a measurement report granularity.

19. A signal measurement apparatus, comprising:

   a transmission module, configured to receive a cell discontinuous reception/transmission configuration sent by a network side device; and
   a measurement module, configured to measure a first signal according to the cell discontinuous reception/-transmission configuration.

20. The apparatus according to claim 19, wherein a measurement requirement corresponding to the first signal is related to the cell discontinuous reception/transmission configuration, and the measurement requirement comprises at least one of the following:

   an evaluation period requirement for evaluating, by the terminal, a first object; and

an evaluation result reporting interval requirement for evaluating, by the terminal, a second object.

21. The apparatus according to claim 20, wherein the first object comprises at least one of layer 1-reference signal received power L1-RSRP, L1-signal-to-noise and interference ratio SINR, radio link monitoring RLM, beam failure detection BFD, candidate beam detection CBD, and radio resource management RRM; or
the second object comprises RLM or BFD.

22. The apparatus according to any one of claims 19 to 21, wherein that a measurement requirement corresponding to the first signal is related to the cell discontinuous reception/transmission configuration information comprises:

determining, according to the cell discontinuous reception/transmission configuration and a measurement requirement corresponding to a first scenario, a measurement requirement corresponding to a second scenario; wherein the first scenario is a scenario that meets a first condition and is not configured with the cell discontinuous reception/transmission configuration, and the second scenario is a scenario that meets the first condition and is configured with the cell discontinuous reception/transmission configuration.

23. The apparatus according to claim 22, wherein the first condition comprises any one of the following:

a terminal discontinuous reception configuration is not configured; and
the terminal discontinuous reception configuration is configured and a related parameter of the terminal discontinuous reception configuration is within a predetermined range.

24. The apparatus according to claim 22, wherein the determining, by the measurement module according to the cell discontinuous reception/transmission configuration and a measurement requirement corresponding to a first scenario, a measurement requirement corresponding to a second scenario comprises:

determining a second parameter according to a cell discontinuous reception/transmission period in the cell discontinuous reception/transmission configuration and a first parameter in the measurement requirement corresponding to the first scenario, wherein the first parameter comprises a signal period of the first signal or a reporting period of a measurement result corresponding to the first signal; and
replacing the first parameter in the measurement requirement corresponding to the first scenario with the second parameter, to obtain the measurement requirement corresponding to the second scenario.

25. The apparatus according to claim 22, wherein the second parameter comprises at least one of the following:

$$T=\max(T1, T2);$$

; and

$$T=\max(T1, T2)/\mathrm{Ceiling}(D/T1);$$

wherein T is the second parameter, T1 is the signal period of the first signal in the first scenario or the reporting period of the measurement result corresponding to the first signal, T2 is the cell discontinuous reception/transmission period, D is active period on duration of the cell continuous reception/transmission, and Ceiling indicates rounding up.

26. The apparatus according to any one of claims 19 to 25, wherein the signal period of the first signal and the cell discontinuous reception/transmission period have an integer multiple relationship; or
the reporting period of the measurement result corresponding to the first signal and the cell discontinuous reception/transmission period have an integer multiple relationship.

27. The apparatus according to any one of claims 19 to 26, wherein the measuring, by the measurement module, a first signal according to the cell discontinuous reception/transmission configuration comprises:

determining a cell discontinuous reception/transmission non-active period non-active period and active period active period according to the cell discontinuous reception/transmission configuration; and
receiving the first signal based on the cell discontinuous reception/transmission active period, and measuring the first signal, or receiving, by the terminal, the first signal that does not meet a second condition based on the cell discontinuous reception/transmission non-active period, and measuring the first signal.

28. The apparatus according to claim 27, wherein the terminal does not expect that the first signal that meets the second condition is to be sent in the cell discontinuous reception/transmission non-active period non-active period.

29. The apparatus according to any one of claims 27 and 28, wherein the second condition comprises at least one of the following:

a signal type of the first signal belongs to a first-type signal set;
the first signal is a signal sent by a serving cell serving cell;
the first signal is a signal sent by a target cell, and the target cell is a cell controlled by cell discontinuous reception/transmission; and
the first signal is controlled by discontinuous reception/transmission or a time domain location of the first signal is controlled by discontinuous reception/transmission.

30. The apparatus according to claim 29, wherein a signal type in the first-type signal set comprises at least one of the following:

a signal used for channel state information reporting CSI reporting, wherein the CSI reporting comprises specific content and is used for specific measurements;
a signal used for RLM;
a signal used for BFD;
a signal used for CBD;
a signal used for RRM; and
a signal used for time-frequency tracing Tracking.

31. The apparatus according to claim 30, wherein the specific content comprises at least one of a rank indicator RI, a precoding matrix indicator PMI, L1-RSRP, and L1-SINR; or
the specific measurement comprises channel measurement or interference measurement.

32. The apparatus according to any one of claims 19 to 31, wherein the transmission module is further configured to:
receive first configuration information;
wherein the first configuration information comprises at least one of the following:

first information, used to indicate whether a type of the first signal is controlled by cell discontinuous reception/-transmission;
second information, used to indicate a cell list cell list controlled by cell discontinuous reception/transmission;
third information, used to indicate time domain configuration information controlled by cell discontinuous reception/transmission; and
fourth information, used to indicate time domain configuration information that the terminal does not expect to be used for sending the first signal.

33. The apparatus according to claim 32, wherein the first configuration information is configured according to a predetermined granularity, and the predetermined granularity comprises at least one of a signal type granularity, a terminal granularity, a serving cell granularity, a serving cell group granularity, a resource granularity, and a measurement report granularity.

34. A signal measurement apparatus, comprising:

a transmission module, configured to send a cell discontinuous reception/transmission configuration to a terminal;
wherein the cell discontinuous reception/transmission configuration is related to signal measurement performed by the terminal.

35. The apparatus according to claim 34, wherein the transmission module is further configured to send first configuration information to the terminal;
wherein the first configuration information comprises at least one of the following:

first information, used to indicate whether a type of a first signal is controlled by cell discontinuous reception/-transmission;

second information, used to indicate a cell list cell list controlled by cell discontinuous reception/transmission;

third information, used to indicate time domain configuration information controlled by cell discontinuous reception/transmission; and

fourth information, used to indicate time domain configuration information that the terminal does not expect to be used for sending the first signal.

36. The apparatus according to claim 35, wherein the first configuration information is configured according to a predetermined granularity, and the predetermined granularity comprises at least one of a signal type granularity, a terminal granularity, a serving cell granularity, a serving cell group granularity, a resource granularity, and a measurement report granularity.

37. A terminal, comprising a processor and a memory, wherein the memory stores a program or instructions capable of running on the processor, and the program or the instructions is or are executed by the processor to implement the steps of the method according to any one of claims 1 to 15.

38. A network side device, comprising a processor and a memory, wherein the memory stores a program or instructions capable of running on the processor, and the program or the instructions are executed by the processor to implement the steps of the method according to any one of claims 16 to 18.

39. A readable storage medium, wherein the readable storage medium stores a program or instructions, and the program or the instructions are executed by a processor to implement the steps of the method according to any one of claims 1 to 15 or to implement the steps of the method according to any one of claims 16 to 18.

Network
side device

11

11

Terminal

Terminal

FIG. 1

200

| A terminal receives a cell discontinuous reception/ transmission configuration sent by a network side device | S210 |

| Measure a first signal according to the cell discontinuous reception/transmission configuration | S220 |

FIG. 2

300

| A terminal receives a cell discontinuous reception/ transmission configuration sent by a network side device | S310 |

| Measure a first signal according to the cell discontinuous reception/transmission configuration | S320 |

FIG. 3

400

| A terminal receives a cell discontinuous reception/transmission configuration sent by a network side device | — S410 |

| Determine a cell discontinuous reception/ transmission non-active period and active period according to the cell discontinuous reception/transmission configuration | — S421 |
| | — S420 |
| The terminal receives the first signal based on the cell discontinuous reception/transmission Active period, and measures the first signal, or the terminal receives the first signal that does not meet a second condition based on the cell discontinuous reception/transmission non-active period, and measures the first signal | — S422 |

FIG. 4

500

| A network side device sends a cell discontinuous reception/transmission configuration to a terminal | — S510 |

FIG. 5

600

Transmission module — 610

Measurement module — 620

FIG. 6

700

Transmission module — 710

FIG. 7

800

Communication device

801 — Processor ⟷ Memory — 802

FIG. 8

900

| | |
|---|---|
| 901 — Radio frequency unit | Network module — 902 |
| 910 | |
| 909 — Memory / Application program / Operating system | Audio output unit — 903 |
| 908 — Interface unit | Processor |
| 907 — User input unit / 9071 — Touch panel / 9072 — Another input device | 904 / Input unit / Graphics processing unit — 9041 / Microphone — 9042 |
| | 906 / Display unit / Display panel — 9061 |
| | Sensor — 905 |

FIG. 9

FIG. 10

## INTERNATIONAL SEARCH REPORT

| International application No. |
| --- |
| **PCT/CN2024/109857** |

| A. | CLASSIFICATION OF SUBJECT MATTER |
| --- | --- |

H04W 24/08(2009.01)i

According to International Patent Classification (IPC) or to both national classification and IPC

| B. | FIELDS SEARCHED |
| --- | --- |

Minimum documentation searched (classification system followed by classification symbols)

IPC: H04W, H04L, H04Q

Documentation searched other than minimum documentation to the extent that such documents are included in the fields searched

Electronic data base consulted during the international search (name of data base and, where practicable, search terms used)

CNTXT, CNKI, CJFD, WPABS, ENTXT, IEEE, 3GPP: 非连续收发, 测量, 配置, 评估, 周期, 间隔, DTX, DRX, measurement, configuration, estimate, period

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114503486 A (GUANGDONG OPPO MOBILE COMMUNICATIONS CO., LTD.) 13 May 2022 (2022-05-13)<br>description, paragraphs 35-142 | 1-3, 8-21, 26-39 |
| A | CN 114503486 A (GUANGDONG OPPO MOBILE COMMUNICATIONS CO., LTD.) 13 May 2022 (2022-05-13)<br>description, paragraphs 35-142 | 4-7, 22-25 |
| A | CN 113692011 A (HUAWEI TECHNOLOGIES CO., LTD.) 23 November 2021 (2021-11-23)<br>entire document | 1-39 |
| A | CN 116097807 A (GUANGDONG OPPO MOBILE COMMUNICATIONS CO., LTD.) 09 May 2023 (2023-05-09)<br>entire document | 1-39 |
| A | WO 2023040887 A1 (VIVO MOBILE COMMUNICATION CO., LTD.) 23 March 2023 (2023-03-23)<br>entire document | 1-39 |

☐ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 October 2024** | **24 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/109857** |

| Patent document cited in search report | | | Publication date (day/month/year) | Patent family member(s) | Publication date (day/month/year) |
| --- | --- | --- | --- | --- | --- |
| CN | 114503486 | A | 13 May 2022 | None | |
| CN | 113692011 | A | 23 November 2021 | None | |
| CN | 116097807 | A | 09 May 2023 | None | |
| WO | 2023040887 | A1 | 23 March 2023 | None | |

Form PCT/ISA/210 (patent family annex) (July 2022)

**REFERENCES CITED IN THE DESCRIPTION**

**Patent documents cited in the description**

- CN 202311006627